(19) Europäisches Patentamt / European Patent Office / Office européen des brevets

(11) **EP 3 249 236 A1**

(12) **EUROPEAN PATENT APPLICATION**

(43) Date of publication:
**29.11.2017 Bulletin 2017/48**

(51) Int Cl.:
*F04D 27/00* (2006.01)          *B08B 15/02* (2006.01)

(21) Application number: **17170911.6**

(22) Date of filing: **12.05.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **24.05.2016 GB 201609111**

(71) Applicant: **BOFA International Limited
Poole, Dorset BH17 7DX (GB)**

(72) Inventors:
• **LOCKWOOD, Antony Keith
  Verwood, Dorset BH31 6PX (GB)**
• **DOVETON, Matthew John
  Bournemouth, Dorset BH7 6PL (GB)**

(74) Representative: **Robinson, Simon John
Barker Brettell LLP
Medina Chambers
Town Quay
Southampton
SO14 2AQ (GB)**

(54) **FUME EXTRACTION**

(57)    A fume extraction apparatus (1) which comprises an extraction pump (6), and the apparatus further comprising a sensor arrangement (12a, 12b, 13) to measure a differential pressure across the pump and to measure a speed of the extraction pump, and the apparatus comprising a controller (10) which comprises a data processor, the data processor arranged to calculate a flow rate of air through the pump using the measurements from the sensor arrangement, and to compare the calculated flow rate to a target flow rate, and the controller arranged to issue a control signal to control the speed of the pump so as to better align the flow rate with the target flow rate.

FIGURE 1

## Description

## Technical field

The present invention relates generally to fume extraction.

## Background

In many industries such as electronics, fabrication, laser marking, cutting and engraving, and pharmaceuticals, extraction systems are used to capture hazardous particulate and gaseous and vaporised matter generated by industrial processes.

Known fume extraction systems comprise filter units, such as multiple graded particle filters and a gas filter (typically activated carbon-based) which are housed in a single unit, together with an extraction pump. The extraction pump draws contaminated air into the unit, through the filters to remove the contaminants and outputs filtered air to the working area.

When saturated, the filters, and in particular the gas filter, must be replaced. In environments where high rates of gas and vapours are generated, the filters will need to be replaced more often. Fume extraction units usually incorporate a centrifugal suction pump. The suction creates an airflow which removes unwanted particles from an area. The fume extraction units usually provide a means of controlling the airflow rate. There are three methods currently used by fume extraction units, namely, pump voltage control, inlet pressure control and Pitot tube airflow.

Pump voltage control is the simplest means of setting the required extraction airflow. The extraction unit's centrifugal pump has a drive voltage input. The pump's speed is relative to the input driver voltage and pressure. The extraction unit provides a means of allowing the user to control the drive voltage to the pump, in turn controlling the extraction unit.

Although simple this method has a drawback in that the desired airflow is not maintained without user input. The drive voltage is set by the user and will maintain this voltage until changed by a user. As the extraction unit restriction changes, caused by filters blocking or changes in connected equipment, the airflow will change.

An increase in restriction will cause the airflow to decrease, a decrease in restriction or will cause the airflow to increase. Fume extraction units may incorporate two HEPA filters which gradually increase in air restriction as they become blocked. To maintain the desired airflow the user would have to manually increase voltage to the pump as the filters become blocked. A resistive potentiometer can be used to adjust a drive voltage fed to the pump.

The inlet pressure control method uses the unit's inlet differential pressure reading as a control variable in a feedback control loop. The fume extraction unit incorporates an electronic control system. The system monitors the differential pressure between the inlet and atmosphere (gauge pressure). The control system uses the inlet differential pressure reading as a feedback parameter in a motor control algorithm, and, usually as a PI (Proportional Integral) or PID (Proportional Integral Differential) control loop.

A proportional-integral-derivative controller (PID controller) is a control loop feedback mechanism (controller) commonly used in industrial control systems. A PID controller continuously calculates an error value as the difference between a desired set-point and a measured process variable. The controller attempts to minimize the error over time by adjustment of a control variable.

This method allows the user to set the desired speed of the motor to achieve the desired airflow. The actual airflow is not known by the system. Once the user has set the desired motor speed the control system will record the inlet differential pressure and attempt to maintain its value, in turn maintaining the desired airflow. The control loop incorporated into the inlet pressure control method increases the pump drive voltage for a decrease in inlet differential pressure and decreases pump drive voltage for an increase in inlet differential pressure.

This method will maintain the desired airflow as the system's filters progressively block. As the filters block the airflow will reduce, in turn reducing the inlet differential pressure. The control system will determine this and responds by increasing the pump's drive voltage until the inlet differential pressure is at the recorded value, in turn maintaining the desired airflow. When a blocked filter is replaced with a new filter the airflow will increase, the control system will see an increase in inlet differential pressure and decrease the pump drive voltage accordingly.

A disadvantage with this method is that the desired airflow will not be maintained for changes in customer installation. The example is given of a blockage occurring in the interconnecting ducting between the customer's installed equipment and the inlet. An increase in the customer installations restriction would cause the pressure to increase and the airflow to decrease this increasing pressure will cause the control system to decrease the pump drive voltage until recording inlet pressure is met. This will cause the airflow to further decrease. The inlet differential pressure will be maintained but the desired airflow will not. An increase in customer installation restriction will cause the system's airflow to reduce, a decrease in customer installation restriction will cause the system's airflow to increase. The desired airflow will only be met with this method if the customer's installation restriction remains constant after the desired airflow has been set.

The Pitot tube method requires an instrument which is used to measure the velocity of moving air. A fume extraction unit that includes a Pitot tube can determine the air flow rate of the system. In order to calculate the airflow from air velocity the volume of moving air needs to be known. Placing a Pitot tube in a duct which all the system's air moves through allows this to be calculated. The disadvantages of calculating airflow in this way are that a Pitot tube and a Pitot tube housing is required, which restricts the available flow area for air flowing through the system.

We have devised an improved method and apparatus for determining and controlling flow rate in a fume extraction apparatus.

**Summary**

According to a first aspect of the invention there is provided a fume extraction apparatus which comprises an extraction pump, the apparatus further comprising a sensor arrangement to measure a differential pressure across the pump and to measure a rotational speed of the extraction pump, and the apparatus comprising a controller which comprises a data processor, the data processor arranged to calculate a flow rate of air through the apparatus using the measurements from the sensor arrangement, and to compare the calculated flow rate to a target flow rate, and the controller arranged to issue a control signal to control the rotational speed of the pump so as to better align the flow rate with the target flow rate.

The control signal may be termed a correction signal.

The data processor may be arranged to determine the flow rate using a relationship between operational parameters such as flow rate, differential pressure and pump speed. The relationship may be stored as a data set and/or in analytical form, such as by one or more equations, or mathematical statements, of a relationship between variables/operational parameters.

The controller may comprise a memory which stores data representative of a relationship between pressure, flow rate and rotational pump speed. The data may include a number of data sets, each representative of values of particular operational parameters, such as the relationship between pressure and flow rate for a number of rotational pump speeds. The data may comprise a set of discrete data points. The data may be viewed as being characteristic of the operational performance of the pump. The data may be stored in the form of a look-up table. The data may be viewed or considered as idealised or reference data.

The data processor may be configured to use one or a combination of the data set and the mathematical relationships.

Where a flow rate of a measured rotational pump speed at a measured pressure is part of a stored data set, the data processor is operative to use this value of flow rate is used.

Where a measured rotational speed is not provided with a stored related flow rate value in the memory, the data processor is arranged to employ at least one known set of values of flow rate pressure for a given rotational speed, together with a mathematical relationship between the variables at different operational conditions, to determine the flow rate at the measured speed using the known data and the mathematical relationship.

The mathematical relationship comprises at least one of:

Flow (Q) is proportional to shaft speed (N):

$$\frac{Q_1}{Q_2} = \left(\frac{N_1}{N_2}\right)$$

Head pressure (H) is proportional to the square of shaft speed (N):

$$\frac{H_1}{H_2} = \left(\frac{N_1}{N_2}\right)^2$$

Power (P) is proportional to the cube of shaft speed (N)

$$\frac{P_1}{P_2} = \left(\frac{N_1}{N_2}\right)^3$$

Where:

- Q: Volumetric flow
- N: Shaft rotational speed
- H: Pumps head pressure
- P: Shaft power

The data processor may be configured to calculate the pump's differential pressure at a speed for which a reference data set is available, and to use an equation above to calculate said differential pressure, using the speed, the measured speed and the measured pressure differential.

The data processor may be further configured to determine the pump's flow rate using the calculated pressure differential and referring to the data set.

The data processor may be configured to calculate the flow rate at the measured pump speed using the equations above, and based on the calculated flow rate, the measured speed and the data set reference speed.

Two or more data sets, each corresponding to a particular pump speed may be employed in determining a flow rate of a measured speed. Where two data sets are used, each corresponding to a particular pump speed, a weighted average of the calculated flow rates (for the measured speed) is used to determine the calculated flow rate. The weighted average may be based on the relative difference in speed value between each reference value and the measured value. The measured speed value is preferably intermediate of the two reference speed values.

The data processor may be arranged to interpolate between data set points in order to determine a prevailing flow rate through the pump.

The controller may be incorporated (integrally) with a (main) housing of the extractor, or, alternatively, may be separate from the extractor but connected by way of a communications connection. It will be appreciated that the controller, or least a data processor which is configured to process measured parameters, need not necessarily be located or reside within a housing of the extraction unit. For example, the data processor may be a distinct separate unit which is connected to the extraction unit by way of cabling or wiring.

The sensor arrangement may comprise a differential pressure sensor to measure the pressure differential across the pump.

The differential pressure across the pump, and in particular the difference between the prevailing air pressure at an inlet to the pump and that at an outlet to the pump, may be termed the head pressure.

The sensor arrangement may comprise a tachometer to measure the rotational speed of the pump.

The data processor may be arranged to determine a new rotational speed of the pump based on a differential between the calculated flow rate and the target flow rate. The processor need not necessarily attempt to determine a new rotational speed *as such.* The controller uses the flow and target flow as inputs into a suitable PID (or PI) algorithm or sequence of processing steps. The PID algorithm may calculate the drive voltage to the pump based on the error (magnitude) between the calculated flow and the target flow. The PID algorithm may not have knowledge of the pump's speed. The PID algorithm may calculate the rate at which the pump's drive voltage needs to change to maintain or reach the target flow. This in turn controls the pump's rotational speed accordingly.

The data processor may be arranged to determine an outlet gauge pressure, namely which comprises the sum of the measured head pressure and the system vacuum pressure.

The data processor may be arranged to be capable of calculating a measure of power consumption by the pump. The data processor may be arranged to calculate the power consumption of the pump by using an affinity equation. The data processor may be arranged to be capable of determining the operational efficiency of the pump.

According to a second aspect of the invention there is provided a method of determining flow rate in a fume extraction apparatus, the method comprising measuring a differential pressure across a suction pump of the apparatus, and measuring a rotational speed of the suction pump, the method further comprises comparing the calculated flow rate with a target flow rate, and issuing a control signal to control the pump speed to better align the flow rate with the target flow rate.

It will be appreciated that where reference is made to the data processor determining/calculating variables such as speed, pressure, flow and power, a measure of one or more of those may be determined/calculated.

The apparatus or the method may include one or more features as described in the description and/or as shown in the drawings, either individually or in combination.

**Brief Description of the Drawings**

Various embodiments of the invention will now be described, by way of example only, with reference to the following drawings in which:

   **Figure 1** is a schematic block diagram of a fume extraction unit,

   **Figure 2** is a plot of predetermined pump curve data, representative of a pump's operational characteristics at different rotational speeds,

   **Figure 3** is a plot of a pump flow rate determined from a single predetermined operational parameter data set,

   **Figure 4** is a plot a pump flow rate determined from two predetermined operational parameter data sets, and

   **Figure 5** shows a pressure differential sensing arrangement

**Detailed Description**

There is now described an apparatus and method for accurately determining flow rate of air through a fume extraction unit 1.

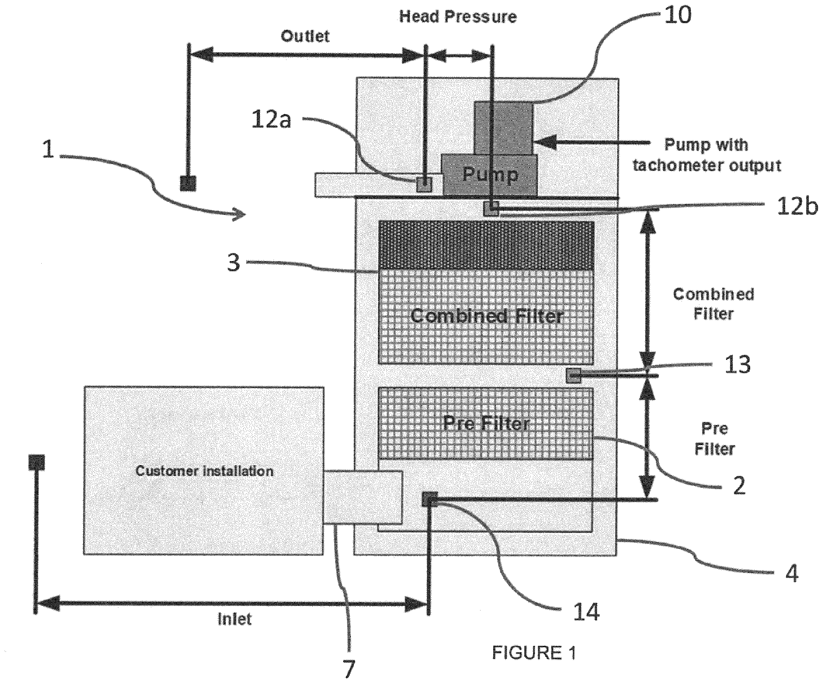

With reference initially to Figure 1, the fume extraction unit 1 comprises at least one graded particle filter (referred to as a pre-filter 2) and a gas filter (typically activated carbon-based, and referred to as a combined filter 3) which are housed in a single unit 4, together with an extraction pump 6. In use, the extraction pump draws contaminated air into the unit, through an inlet 7, through the filters 2 and 3 to remove the contaminants and then output filtered air to the working area.

The unit 1 further comprises a controller 10 comprising a data processor and a memory, which is connected to various sensors, and is arranged to perform various processing tasks, which includes providing a control signal to control the rotational speed of the pump 6.

The unit 1 yet further comprises a sensor array, which comprises a pump differential sensor, indicated at 12a and 12b, and essentially comprises a differential pressure sensor with its sensing inlet points located at 12a and 12b, and thereby measures the differential pressure across the outlet and the inlet (respectively). The sensor arrangement further comprises a pressure sensor 13 which is located at the outlet (or immediately downstream) of the pre-filter 2 and a pressure sensor 14 which is located at the inlet (or immediately upstream of) the pre-filter 2. Finally, the sensor arrangement comprises a tachometer (unreferenced) which monitors the rotational speed of the pump.

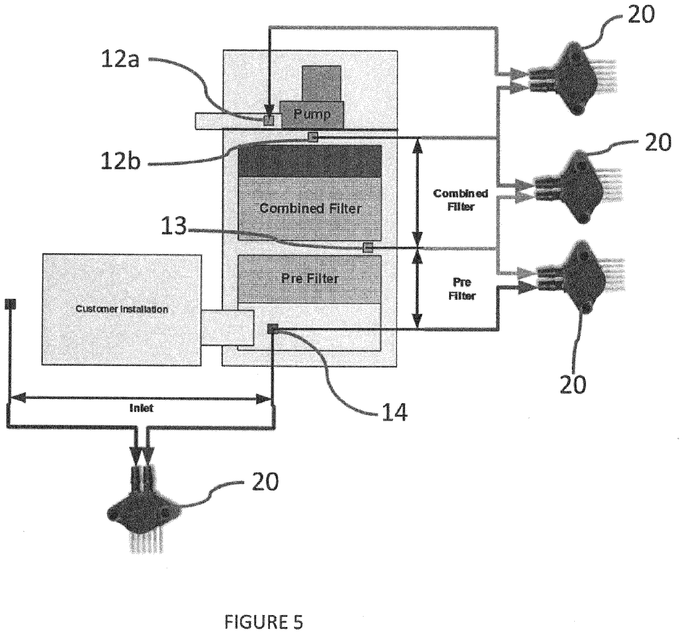

Reference is made to Figure 5 which shows an example how the (differential) pressure sensors could be implemented. As can be seen, four differential pressure sensors are used. Each sensor (arrangement) determines the difference in pressure between two pressure measurement points. This may be realised by way of a dual inlet device or manifold 20 connected by tubing to the measurement points, for each sensor inlet.

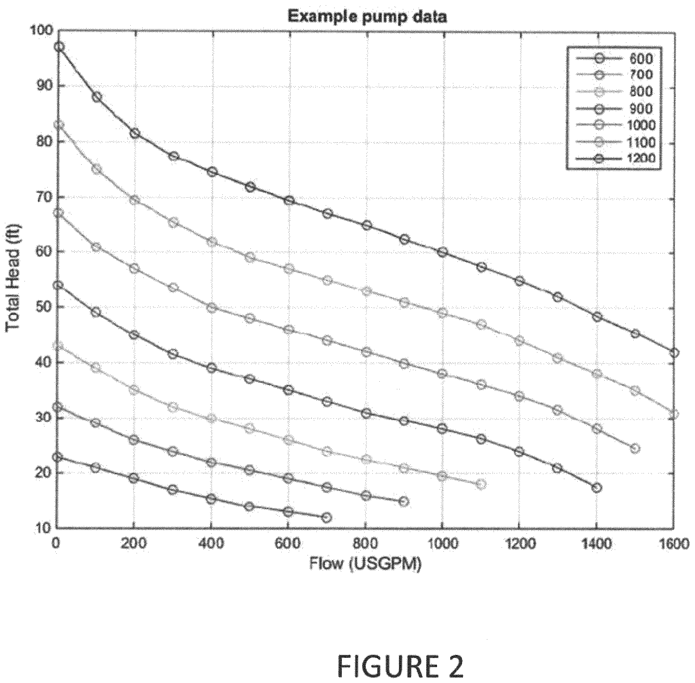

The memory of the controller 10 is arranged to store predetermined pump curve data, as shown for example in Figure 2. This could be data which is collected during a calibration phase or which is provided by a pump manufacture, for example from a data sheet. This data will serve as reference data which will be used in determining flow rate at a measured rotational speed of the pump. The way that this stored data is used will be described in more details below.

The suction pump 6 comprises a centrifugal suction pump. This type of pump is subject to a set of relationships between the variables, sometimes referred to as affinity laws. These express the mathematical relationship between the operational parameters of head pressure, volumetric flow rate, power usage and shaft speed of a centrifugal pump. These can be expressed in the following equations (for fixed impeller diameter):

Flow (Q) is proportional to shaft speed (N):

$$\frac{Q_1}{Q_2} = \left(\frac{N_1}{N_2}\right)$$

Head pressure (H) is proportional to the square of shaft speed (N):

$$\frac{H_1}{H_2} = \left(\frac{N_1}{N_2}\right)^2$$

Power (P) is proportional to the cube of shaft speed (N)

$$\frac{P_1}{P_2} = \left(\frac{N_1}{N_2}\right)^3$$

Where:

- Q: Volumetric flow
- N: Shaft rotational speed
- H: Pumps head pressure

- P: Shaft power

As will be described, these relationships will be used to calculate the change in one variable for a change in another. For example, if the speed, head pressure and flow are known, then the head pressure and flow of the pump could be calculated for a change in speed.

In overview, the controller 10 incorporates a processing routine which calculates the system's airflow using the pump's measured head pressure and measured speed, along with predetermined pump reference/performance datasets which are stored in the memory, and interpolation. The calculated flow value is then used as a feedback parameter in a PI or PID motor control algorithm. This then allows the control system to maintain the desired target airflow. If the pump's measured speed is equal to a predetermined value in the stored dataset, then the airflow rate can be determined directly from the data. Alternatively, if the pumps measured speed lies in between two predetermined data set speeds, then the airflow can be calculated using a combination of the mathematical relationships and interpolation.

Broadly, calculating the pump's current flow requirements includes performing the following steps:

1. measuring pump speed and head pressure
2. calculating the pump's head pressure at stored dataset speed using the head pressure relative to speed relationship
3. obtaining a calculated pumps flow rate at the measured speed using the stored dataset and calculated head pressure
4. calculating the flow at the current speed using the calculated flow and the flow/speed relationship.

An example of how the above processing steps can be implemented is now described with reference to using the data curve of the 1200 rpm line shown in Figure 2. Within the memory of the controller this, and indeed each of the data lines, is stored as a data set of discrete points.

Firstly, in order to calculate the pump's flow, the pump's current rotational speed and its current head pressure are measured by the respective sensors. For the purpose of this example, we will use the values of speed equal to 1050 rpm and measured head pressure equal to 50 ft. The data processor is configured to calculate the pump's expected head pressure at the speed of the stored data set at 1200 rpm. By use of the equation:

$$\frac{H_1}{H_2} = \left(\frac{N_1}{N_2}\right)^2$$

Where:

$H_1$ equals head pressure at stored data set value.
$H_2$ equals current or prevailing head pressure

$N_1$ equals RPM of stored data set.
$N_2$ equals current RPM

Rearranging this equation allows the data processor to calculate the expected head pressure of the pump at 1200 rpm. In this case, this value is equal to 65.3 ft.

The data processor is then configured to refer to the stored data set using the just calculated head pressure value to determine the corresponding expected flow at 1200 rpm. In this example, this is equal to 785 USGPM (US Gallons Per Minute).

The data processor is then operative to calculate the flow rate at the current or prevailing speed namely 1050 rpm, using the obtained flow rate of 785USGPM at 1200 rpm by making use of the following equation:

$$\frac{Q_1}{Q_2} = \left(\frac{N_1}{N_2}\right)$$

Where:

$Q_1$ equals obtained pump-data flow rate (785USGPM)
$Q_2$ equal to current pump flow rate
$N_1$ equals stored data set pump speed (1200 rpm)
$N_2$ equals current pump speed (1050 rpm)

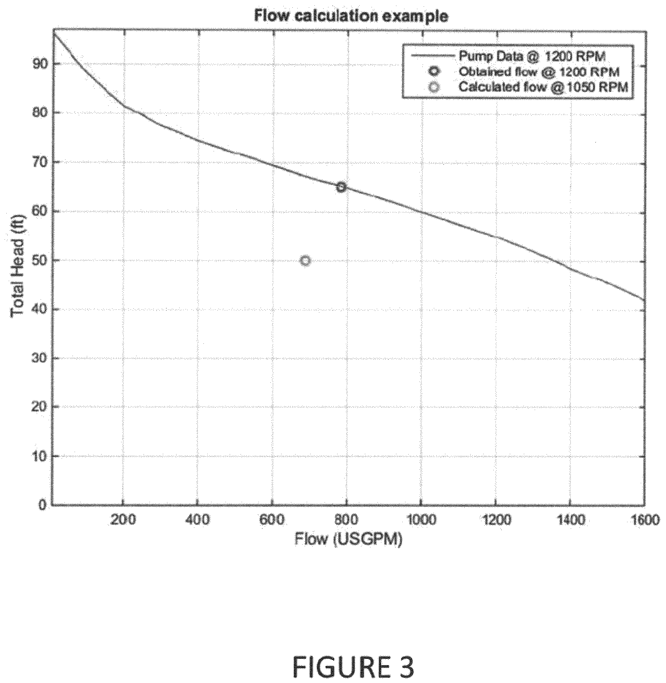

Rearranging this equation, the data processor is able to determine the flow rate at 1050 rpm, namely, in this case, 687 USGPM. This is shown in Figure 3.

The data processor having now calculated the current flow rate can then compare this value to the set target flow rate which is stored in the memory. In the event that the current flow rate is not equal to the determined flow rate, the data processor is configured to output a control or correction signal to the pump which is operative to control the rotational speed of the pump with the objective of bringing the actual flow rate to the target rate. A PID or PI algorithm is used by the data processor to use flow and target flow as parameters in a feedback control loop (PID, PI). The PID algorithm calculates a measure of the required pump drive voltage (to maintain or reach or better align) with the target flow.

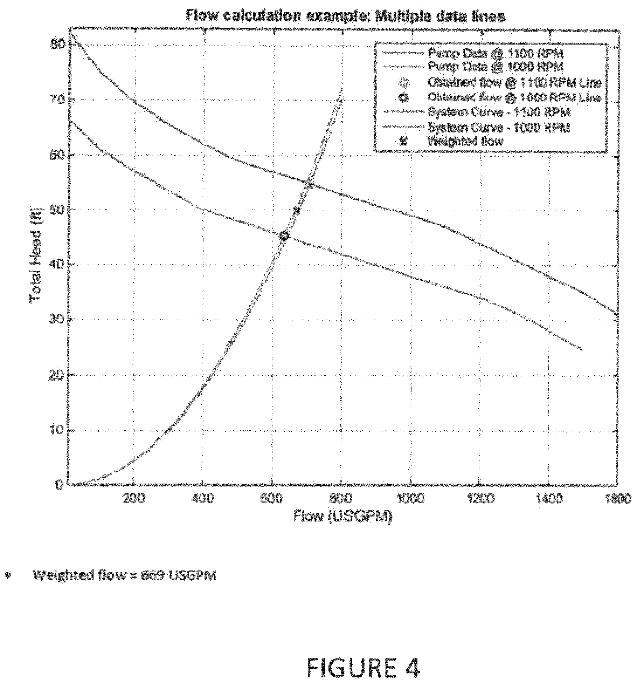

The equations referred to above assume that the pump efficiency remains constant. In an ideal pump, it would be possible to calculate all pump flows by using a single stored pump data line or data set for a particular speed. However, the actual pump operational performance data strays or deviates from the ideal. Therefore, relying on a single data set or data line introduces the risk of calculation errors and accordingly erroneous flow rate values. Therefore, in order to enhance the accuracy of the flow rate determinations performed by the data processor of the controller as will now be described, multiple pump data lines or data sets will be used in determining a flow rate at a measured rotational speed of the pump. As will be described below, use is made of the two closest stored data lines to the measured speed in order to calculate the pumps instantaneous flow rate. In this example, we again refer to a measured speed of 1050 rpm and a head pressure of 50ft. In this example, reference is made to Figure 4 and the two data lines which will be used i.e. which are on each side of an intermediate of, the current pump speed point, are the 1100 rpm data-line and the 1000 rpm data-line.

The data processor is first configured to use the equations referred above to calculate the expected head pressures on each of the reference data lines at 1000 and 1100 rpm respectively. The equations referred to above can again be used by the data processor to calculate the expected flow rate at the current pump speed using in turn, each of the data lines. The calculated flows for each of the data set reference speeds are as follows:

1100 rpm data line calculated flow equals 664 USGPM

1000 rpm data line calculated flow equals 674 USGPM

These points are shown on Figure 4.

The above calculated data can then be used for the data processor to calculate a final flow at the measured current speed. This final flow calculation includes determining a weighted average which is proportional to how close the current speed is to the two chosen data-line speeds. This skews the result in favour of the stored data line which is closest to the measured current pump speed. In this current example, the current speed lies exactly between the adjacent line speeds, and therefore the calculated flow will be the average of both results.

The above described fume extraction apparatus represents a novel and advantageous manner of determining and controlling flow rate. In particular, the advantages include:

Accurate airflow calculation
Relatively high pressure v flow readings (as compared to use of a Pitot tube)

In an alternative arrangement, the differential pressure across the extraction pump may be determined by the data processor in a different manner. This method involves obtaining the head pressure indirectly by monitoring the pressures on each side of the pump and then using these measured values to calculate the head pressure. In particular, the pumps head pressure can be calculated by calculating the system vacuum which is the sum of the pressure across the combined filter, the pressure across the pre-filter and the pressure across the inlet from which is then deducted the outlet pressure. In this manner of determining the differential pressure in combination with other sensors and not directly with each other to determine the pressure value.

The above apparatus can also be used within systems that use several pumps in parallel to provide higher flow rates. In such an arrangement, average head pressure across all pumps can be monitored using a single differential pressure sensor, by the controller. One of two methods can then be used to obtain the pump speeds, either average speed or individual speed determination.

The average speed of the connected pumps is calculated and used to then calculate the overall flow of the system. Typically the same type of pump will be used within a single system. Each pump is driven by the same drive voltage and the speeds of the pumps should be very close to each other.

In the case of the individual speed method determination, the speed of each pump will be obtained independently. The independent speeds will be used to calculate the flows of each pump. The system flow will be calculated as the accumulation or sum of the calculated independent flows.

In addition to collecting flow and head pressure at a given RPM, the controller is also configured to be capable of determining the pump's input power (W). This power data could be collected during a test/calibration phase. The running power usage is calculated from this obtained data only, and no power monitoring device is installed within the unit during operation. This allows the unit power usage to be monitored. By use of techniques using the equations referred to above, the data processor is capable of calculating the running power usage of the system. Calculating the unit's power usage allows the running costs of the system to be calculated. This in turn allows the most cost effective time to replace filters to be determined. In known fume extraction controllers when a filter is determined by the controller to be blocked, the user is notified when the target air flow cannot be reached. This method provides the user with the longest possible filter life at the systems target flow. Although this method increases filter life it may be not the most cost effective solution. Towards the end of a filter's life its air restriction increases. The increased air restriction means that the pump has to work harder to achieve the target air flow, increasing the cost of running the unit. The calculated running cost of the unit can be used to determine the most cost effective time to replace a filter, taking account of power cost, filter cost (in terms of unit price and delivery cost). Moreover, if the fume extraction unit is connected by way of communications network such as the internet, account can also be taken of location stock levels and stock space. It will be possible to determine the most cost effective filter replacement schedule taking into account reduced delivery cost for bulk delivery.

The apparatus 1 can also advantageously be used to obtain an outlet 'gauge' pressure reading. This is the system vacuum plus the head pressure. The system vacuum is the sum of the combined differential pressure, the Pre-Filter differential pressure and the inlet differential pressure. The data processor can therefore readily determine the outlet gauge pressure. This allows the controller to monitor the complete system's pressure usage without the addition of a dedicated differential pressure sensor for the purpose of measuring the outlet differential pressure.

## Claims

1. A fume extraction apparatus which comprises an extraction pump, and the apparatus further comprising a sensor arrangement to measure a differential pressure across the pump and to measure a speed of the extraction pump, and the apparatus comprising a controller which comprises a data processor, the data processor arranged to calculate a flow rate of air through the pump using the measurements from the sensor arrangement, and to compare the calculated flow rate to a target flow rate, and the controller arranged to issue a control signal to control the speed of the pump so as to better align the flow rate with the target flow rate.

2. A fume extraction apparatus as claimed in claim 1 in which the data processor is arranged to determine the flow rate using a relationship between flow rate, differential pressure and pump speed.

3. A fume extraction apparatus as claimed in claim 2 in which the relationship used by the data processor comprises at least one of a stored data set representative of the relationship and a mathematical form of the relationship.

4. A fume extraction apparatus as claimed in claim 3 in which the data is representative of the relationship between differential pressure and flow rate for a number of pump speeds.

5. A fume extraction apparatus as claimed in claim 3 or claim 4 in which the data comprises a set of discrete data points.

6. A fume extraction apparatus as claimed in in any of claims 3, 4 or 5 in which the data is characteristic of the operational performance of the pump.

7. A fume extraction apparatus as claimed in any of claims 2 to 6 wherein the data processor configured to determine that where a measured pump speed corresponds to a stored data set of flow rates at that speed, the data processor is operative to determine flow rate based on use of that data set.

8. A fume extraction apparatus as claimed any of claims 2 to 7 in which the data processor is configured to determine current flow rate using a combination of stored operational parameter values and a mathematical form of the relationship between operational parameters.

9. A fume extraction apparatus as claimed in claim 8 in which the data processor is arranged to employ at least one stored set of flow rate and pump differential pressure data for a given rotational speed, together with a mathematical relationship between the operational parameters, to thereby determine the flow rate at the measured speed using the stored data and the mathematical relationship.

10. A fume extraction apparatus as claimed in claim 9 in which the data processor is arranged to use two stored sets of operational parameter data, each associated with a respective pump speed.

11. A fume extraction apparatus as claimed in claim 10 in which the two sets of data are selected by the data processor such that the measured speed is intermediate of the speeds associated with the selected data sets.

12. A fume extraction apparatus as claimed in claim 11 in which the data processor is configured to determine the flow rate based on a weighted average of the flow rates determined from each of the data sets.

13. A fume extraction apparatus as claimed in any of claims 3 to 12, in which the mathematical relationship comprises at least one of the flow rate through the pump being proportional to the pump speed, and the differential pressure across the pump being proportional to the square of the pump speed.

14. A method of determining flow rate in a fume extraction apparatus, the method comprising measuring a differential pressure across an extraction pump of the apparatus, and measuring a speed of the suction pump, calculating a flow rate of air through the pump using the measurements, the method further comprises comparing the calculated flow rate with a target flow rate, and issuing a control signal to control the pump speed to better align the flow rate with the target flow rate.

FIGURE 1

EP 3 249 236 A1

FIGURE 2

**Flow calculation example**

FIGURE 3

Flow calculation example: Multiple data lines

• Weighted flow = 669 USGPM

FIGURE 4

EP 3 249 236 A1

FIGURE 5

Europäisches
Patentamt

European
Patent Office

Office européen
des brevets

# EUROPEAN SEARCH REPORT

Application Number

EP 17 17 0911

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 586 861 A (BERGER THOMAS A [US]) 24 December 1996 (1996-12-24) * column 3, lines 1-15 * * figures 1,2 * * column 3, line 56 - column 4, line 6 * | 1-14 | INV. F04D27/00 B08B15/02 |
| A | US 2014/133999 A1 (HU GE [CN]) 15 May 2014 (2014-05-15) * paragraphs [0058] - [0067] * * paragraph [0079] * * paragraphs [0081], [0082] * * claims 1,3 * | 1-14 | |
| X | US 6 186 744 B1 (WOLOCHUK MARK C [US]) 13 February 2001 (2001-02-13) * claim 1 * | 1,14 | |
| A | US 2008/188173 A1 (CHEN JIE [US] ET AL) 7 August 2008 (2008-08-07) * paragraphs [0038], [0039] * * paragraphs [0067], [0068] * | 1-14 | |
| | | | TECHNICAL FIELDS SEARCHED (IPC) F04D B08B F24C F24F |

The present search report has been drawn up for all claims

| Place of search | Date of completion of the search | Examiner |
|---|---|---|
| The Hague | 15 September 2017 | Ingelbrecht, Peter |

EPO FORM 1503 03.82 (P04C01)

**EP 3 249 236 A1**

## ANNEX TO THE EUROPEAN SEARCH REPORT
## ON EUROPEAN PATENT APPLICATION NO.

EP 17 17 0911

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2017

| Patent document cited in search report | | Publication date | Patent family member(s) | | Publication date |
|---|---|---|---|---|---|
| US 5586861 | A | 24-12-1996 | CA | 2123640 A1 | 18-11-1994 |
| | | | EP | 0626519 A1 | 30-11-1994 |
| | | | JP | H07151093 A | 13-06-1995 |
| | | | US | 5586861 A | 24-12-1996 |
| US 2014133999 | A1 | 15-05-2014 | CA | 2828118 A1 | 13-05-2014 |
| | | | CN | 103809437 A | 21-05-2014 |
| | | | EP | 2730786 A1 | 14-05-2014 |
| | | | ES | 2545253 T3 | 09-09-2015 |
| | | | JP | 5753228 B2 | 22-07-2015 |
| | | | JP | 2014098536 A | 29-05-2014 |
| | | | MX | 344138 B | 07-12-2016 |
| | | | US | 2014133999 A1 | 15-05-2014 |
| US 6186744 | B1 | 13-02-2001 | NONE | | |
| US 2008188173 | A1 | 07-08-2008 | CA | 2676104 A1 | 14-08-2008 |
| | | | EP | 2118575 A1 | 18-11-2009 |
| | | | US | 2008188173 A1 | 07-08-2008 |
| | | | WO | 2008097743 A1 | 14-08-2008 |

EPO FORM P0459

For more details about this annex : see Official Journal of the European Patent Office, No. 12/82